# EUROPEAN PATENT SPECIFICATION

(11) **EP 4 275 931 B1**
(45) Date of publication and mention of the grant of the patent: **13.08.2025**
(21) Application number: 22739797.3
(22) Date of filing: 14.01.2022
(51) Int. Cl.: B60H 1/22, E02F 9/08, E02F 9/22, B60H 1/14, B60H 1/00, E02F 9/16, E02F 9/20

(54) **HEATER SYSTEM OF ELECTRIC CONSTRUCTION MACHINE**
HEIZSYSTEM FÜR EINE ELEKTRISCHE BAUMASCHINE
SYSTÈME DE CHAUFFAGE D'UNE MACHINE DE CONSTRUCTION ÉLECTRIQUE

(30) Priority: 15.01.2021 KR 20210006309
(43) Date of publication of application: 15.11.2023
(73) Proprietor: HD Hyundai Infracore Co., Ltd., Incheon 22502 (KR)
(72) Inventor: SEO, Hyunjae, Ansan-si, Gyeonggi-do 15447 (KR)
(74) Representative: Isarpatent
(86) International application number: PCT/KR2022/000782
(87) International publication number: WO 2022/154605

(56) References cited:
- FR-A1- 2 536 346
- JP-A- 2011 020 640
- JP-A- 2013 082 260
- JP-A- 2018 114 833
- JP-A- S59 102 611
- KR-A- 20090 013 590
- KR-B1- 101 389 615
- KR-B1- 102 017 587
- US-A- 5 355 939

## Description

### TECHNICAL FIELD

The present invention relates to a heater system for an electric construction machine.

### BACKGROUND ART

A working device such as a bucket of an excavator or a traveling device is driven by an working fluid delivered from a hydraulic pump. Such a hydraulic pump is driven by an internal combustion engine. However, an excavator driven by an engine emits not only exhausts but also loud noise, so it is not suitable for work at construction sites such as hospitals or schools that are sensitive to smoke or noise. For this reason, an electric excavator which drives a hydraulic pump using an electric motor connected to a battery has recently been developed.

Engine-driven excavators use engine cooling water to heat the driver's seat. More specifically, in the case of an engine-driven excavator, cooling water for cooling the engine cools the engine while flowing along a flow path formed in the engine by a water pump, and the cooling water heated by the engine is circulated to a radiator to be cooled. Part of the cooling water heated by the engine is diverted to a heat exchanger and used as a heat source for heating the driver's seat.

However, in the case of an electric excavator, since there is no engine, a method of heating a driver's seat using engine cooling water may not be used.

FR 2 536 346 A1 provides a process for exploiting the waste heat from hydraulic drive machines mounted on vehicles in a working fluid circuit composed at least of a pump group, a collector group and a cooling group.

### DETAILED DESCRIPTION OF THE INVENTION

### TECHNICAL OBJECTIVES

The present invention is directed to a heater system for an electric construction machine capable of heating a cabin.

### TECHNICAL MEANS TO SOLVE THE PROBLEM

The present invention is set out by the appended claims.

According to the present invention, a heater system of an electric construction machine including a hydraulic pump driven by an electric motor and a main control valve configured to supply a working fluid discharged from the hydraulic pump to at least one actuator is provided, as defined by independent claim 1. The heater system includes: a heater core which is disposed downstream of the actuator and through which the working fluid passes, wherein a heated air is supplied to a cabin through the heater core using a heat of the working fluid.

According to the present invention, the heater system of an electric construction machine further includes: a switching valve configured to selectively supply the working fluid to the heater core.

According to the present invention, the heater system of an electric construction machine further includes: an oil cooler configured to control a temperature of the working fluid.

Preferably, the heater system of an electric construction machine may further include: an oil cooler disposed upstream of the heater core and configured to control a temperature of the working fluid.

Preferably, the oil cooler may be disposed between the switching valve and a working fluid tank or between the switching valve and the main control valve.

According to the present invention, a flow path of the working fluid supplied through the switching valve is branched into each of the heater core, the oil cooler and a working fluid tank.

Preferably, when the temperature of the working fluid supplied from the main control valve is equal to or less than a preset first temperature, the switching valve may be switched so that the working fluid is supplied to the working fluid tank.

Preferably, when the temperature of the working fluid supplied from the main control valve is higher than a preset first temperature, the switching valve may be switched so that the working fluid is supplied to the heater core or the working fluid tank.

Preferably, when the temperature of the working fluid supplied from the main control valve is equal to or higher than a preset second temperature, the switching valve may be switched so that the working fluid is supplied to the heater core, the oil cooler or the working fluid tank.

Preferably, the heater system of an electric construction machine may further include: a fan member configured to control the temperature of the working fluid passing through the oil cooler through control of a rotational speed.

Preferably, the heater system of an electric construction machine may further include: an auxiliary heating device configured to supply the heated air to the cabin.

Preferably, the switching valve may be configured to supply the working fluid to the heater core according to a worker's ON signal.

Preferably, operation of the fan member may be stopped when the temperature of the working fluid is equal to or less than a preset temperature.

Preferably, the fan member may be operated only when the temperature of the working fluid is equal to or higher than a preset temperature.

### EFFECTS OF THE INVENTION

As such, a heater system for an electric construction machine according to various embodiments of the present invention may be applied without a significant change to the conventional hydraulic system or air conditioning system, thereby reducing cost or time in the manufacturing process.

In addition, by using a working fluid of the conventional hydraulic system in the electric construction machine as a heat source, it is not necessary to install a separate heating device, thereby providing the effect of reducing manufacturing costs.

In addition, even when an auxiliary heating device is operated, since it is limitedly operated according to the temperature of the working fluid, the use time thereof may be reduced, thereby reducing the electric energy of the battery.

### BRIEF DESCRIPTION OF DRAWINGS

FIG. 1 is a view conceptually illustrating a supply path of a working fluid when a heater system of an electric construction machine according to an embodiment is in an OFF state.
FIG. 2 is a view conceptually illustrating a supply path of a working fluid when a heater system of an electric construction machine according to an embodiment is in an ON state.
FIG. 3 is a view conceptually illustrating a supply path of a working fluid when a heater system of an electric construction machine is in an OFF state in an embodiment of the present invention.
FIG. 4 is a view conceptually illustrating a supply path of a working fluid when a heater system of an electric construction machine is in an ON state in an embodiment of the present invention.
FIG. 5 is a view conceptually illustrating a supply path of a working fluid when a temperature of a working fluid in a heater system of an electric construction machine according to an exemplary embodiment of the present invention is equal to or less than a preset first temperature.
FIG. 6 is a view conceptually illustrating a supply path of a working fluid when a temperature of a working fluid is higher than a preset first temperature in a heater system of an electric construction machine according to an exemplary embodiment of the present invention.
FIG. 7 is a view conceptually illustrating a supply path of a working fluid when a temperature of a working fluid is higher than a preset second temperature in a heater system of an electric construction machine according to an exemplary embodiment of the present invention.
FIG. 8 is a graph illustrating a rotational speed control state of a fan member according to a temperature of a working fluid flowing into an oil cooler in a heater system of an electric construction machine according to various embodiments of the present invention.

### BEST MODES FOR CARRYING OUT THE INVENTION

Hereinafter, for convenience of description, some embodiments of the present invention will be described through exemplary drawings. In describing the reference numerals for the components of each drawing, the same numerals indicate the same components as much as possible, even if they are illustrated in different drawings.

Terms or words used in this specification and claims should not be limited to their usual or dictionary meanings, and it should be interpreted as a meaning and concept consistent with the present invention based on the principle that the inventor may appropriately define the concept of terms in order to explain his or her invention in the best way. Also, terms such as first, second, A, B, (a), and (b) may be used to describe components of an embodiment of the present invention. These terms are only used to distinguish the component from other components, and the nature, order, or sequence of the corresponding component is not limited by the term. When an element is described as being 'connected' or 'coupled' to another element, that element may be directly connected or coupled to the other element, but it should be understood that there is another element 'connected' or 'coupled' between the element and the other element.

Hereinafter, a heater system of an electric construction machine according to various embodiments of the present invention will be described in detail with reference to the accompanying drawings.

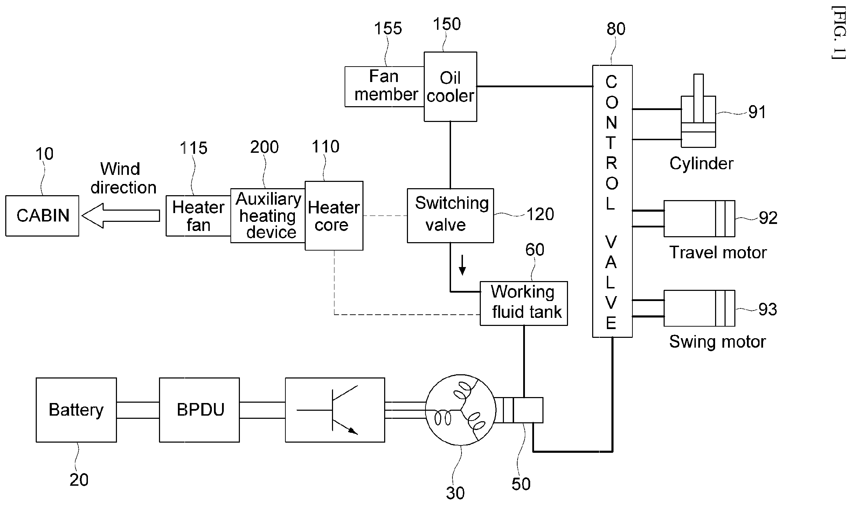

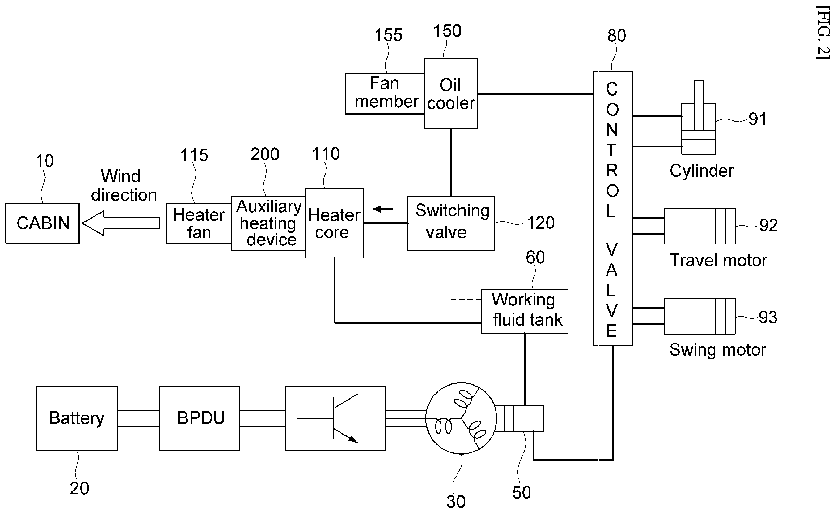

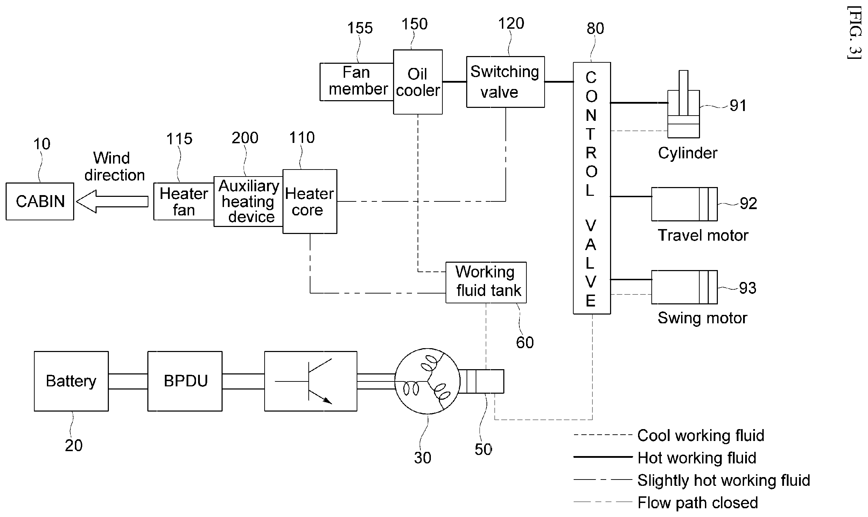

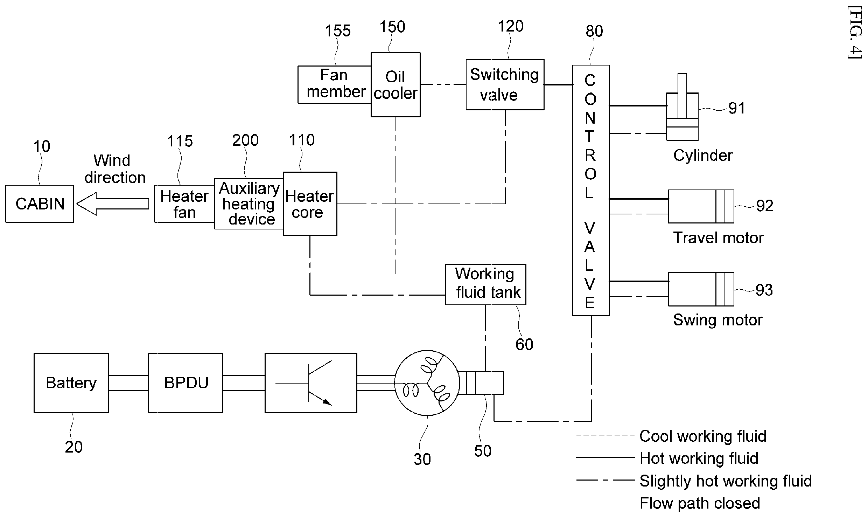

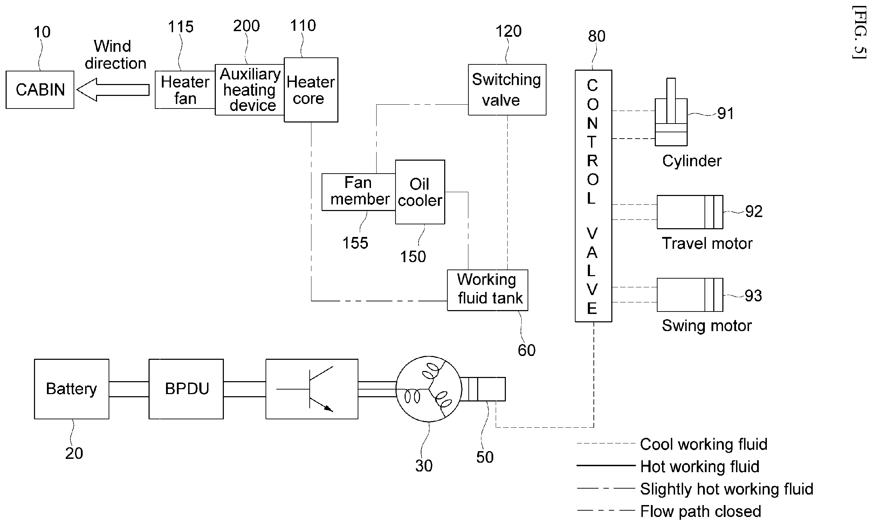

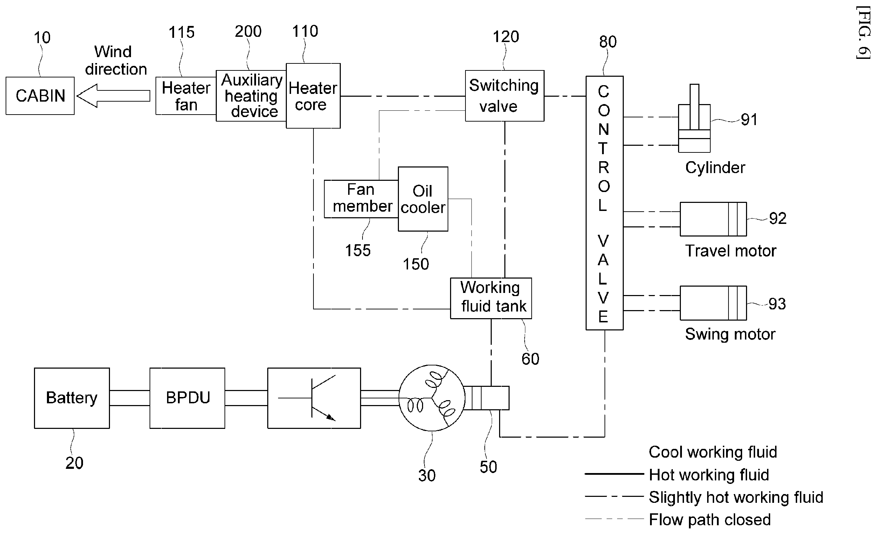

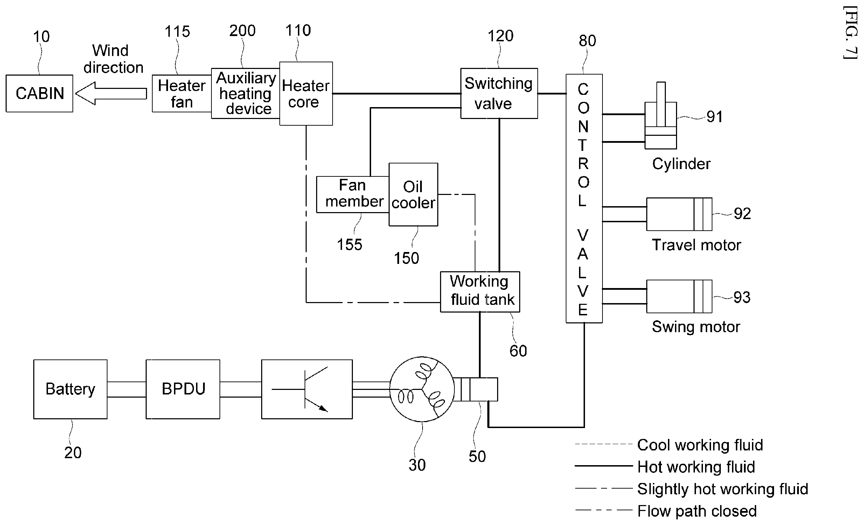

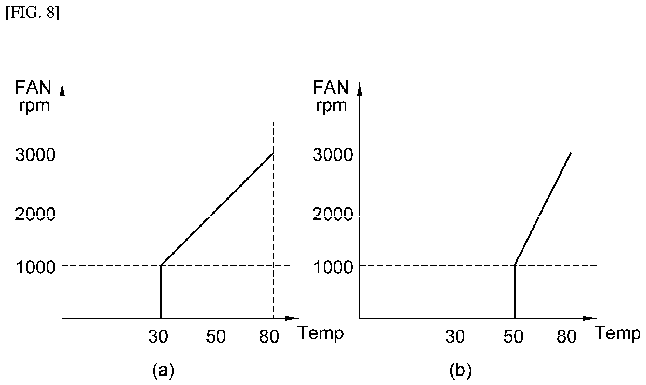

FIG. 1 is a view conceptually illustrating a supply path of a working fluid (e.g., hydraulic oil) when a heater system of an electric construction machine according to an embodiment is in an OFF state, FIG. 2 is a view conceptually illustrating a supply path of a working fluid when a heater system of an electric construction machine according to an embodiment is in an ON state, FIG. 3 is a view conceptually illustrating a supply path of a working fluid when a heater system of an electric construction machine is in an OFF state in an embodiment of the present invention, FIG. 4 is a view conceptually illustrating a supply path of a working fluid when a heater system of an electric construction machine is in an ON state in another embodiment of the present invention, FIG. 5 is a view conceptually illustrating a supply path of a working fluid when a temperature of a working fluid in a heater system of an electric construction machine according to an exemplary embodiment of the present invention is equal to or less than a preset first temperature, FIG. 6 is a view conceptually illustrating a supply path of a working fluid when a temperature of a working fluid is higher than a preset first temperature in a heater system of an electric construction machine according to an exemplary embodiment of the present invention, FIG. 7 is a view conceptually illustrating a supply path of a working fluid when a temperature of a working fluid is higher than a preset second temperature in a heater system of an electric construction machine according to an exemplary embodiment of the present invention, and FIG. 8 is a graph illustrating a rotational speed control state of a fan member 155 according to a temperature of a working fluid flowing into an oil cooler 150 in a heater system of an electric construction machine according to various embodiments of the present invention.

Referring to FIGS. 1 to 8, a heater system of an electric construction machine according to various embodiments of the present invention relates to a heater system applied to an electric construction machine driven by an electric motor 30.

As illustrated in FIG. 1, an electric construction machine to which a heater system is applied replaces an internal combustion engine such as an engine and has a structure in which a hydraulic pump 50 is driven through an electric motor 30 using a battery 20. When the hydraulic pump 50 is driven by the electric motor 30, a working fluid for operating an actuator 90 such as a work apparatus is discharged from the pump. The working fluid discharged from the pump may be supplied to the actuator 90 for operating a cylinder 91 such as a boom, arm, bucket, and the like, a travel motor 92, or a swing motor 93 through a main control valve (MCV) 80.

A temperature of the working fluid increases in the process of operating the actuator 90, and the present invention proposes a method of using the heat of the working fluid used when operating the construction machine as a heat source.

The heater system of the electric construction machine according to various embodiments of the present invention may include a heater core 110, a switching valve 120, and an oil cooler 150. In addition, a fan member 155 of the oil cooler 150 and an auxiliary heating device 200 may be further included.

In the present invention, a control switch capable of controlling on/off of the heater system may be disposed inside a cabin 10, and operation of the heater system may be determined by an worker manipulating the control switch. When an worker operates the control switch in an ON state, the working fluid whose temperature has increased may be supplied to the heater core 110.

The heater core may be disposed downstream of the main control valve 80 and may form a flow path through which the working fluid may flow therein. The heater core 110 may be formed in various structures, and is not limited to its shape.

In the process of operating the actuator 90, a working fluid whose temperature has increased may flow into the heater core 110. When the working fluid is introduced into the heater core 110, the temperature of the heater core 110 rises due to the temperature of the working fluid, and a waste heat of the working fluid may be recovered by using the heater core 110.

That is, the heat of the working fluid may be recovered by passing the working fluid through the heater core 110 so that the heated air may be supplied to the inside of the cabin 10. To this end, a heater fan 115 for generating a flow of air toward the inside of the cabin 10 may be disposed on one side of the heater core 110.

The working fluid whose heat is recovered through the heater core 110 may be supplied to the pump again through the working fluid tank 60 in a state in which the temperature is lowered again.

A switching valve 120 may be disposed upstream of the heater core 110. The switching valve 120 may be switched by an operation signal of the control switch. A supply line of the working fluid passing through the actuator 90 may be controlled through the switching valve 120. As the switching valve 120 is switched according to whether the control switch of the heater system is operated by the worker, the working fluid passing through the actuator 90 may be selectively supplied to the working fluid tank 60 or the heater core 110.

In one embodiment, when a worker turns on the heater system, the switching valve 120 may be switched to supply the working fluid to the heater core 110 according to a corresponding signal. Also, when the worker turns off the heater system, the switching valve 120 may be switched so that the working fluid does not flow into the heater core 110 and is returned to the working fluid tank 60.

In one embodiment, the switching valve 120 and the heater core 110 may be disposed downstream of the oil cooler 150. In this case, the temperature of the working fluid flowing into the heater core 110 through the switching valve 120 may be properly adjusted by the oil cooler 150.

In another embodiment, the switching valve 120 and the heater core 110 may be disposed upstream of the oil cooler 150. In this case, the working fluid may be recovered to the working fluid tank 60 in a cooled state by the oil cooler 150.

The heater system of the electric construction machine of the present invention may include the oil cooler 150. The oil cooler 150 may be disposed on the working fluid flow path to control the temperature of the working fluid whose temperature has increased while passing through the actuator 90. At least one temperature sensor capable of sensing the temperature of the working fluid may be disposed in the oil cooler 150. When the working fluid flows into the oil cooler 150, the fan member 155 installed on one side of the oil cooler 150 is operated to cool the working fluid inside the oil cooler 150. In the present invention, the temperature of the working fluid may be controlled by controlling a rotational speed of the fan member 155.

In one embodiment, the oil cooler 150 is disposed upstream of the switching valve 120 and the heater core 110 to adjust the temperature of working fluid flowing into the heater core 110.

Referring to FIG. 1, the working fluid whose temperature has risen in the process of passing through the actuator 90 may be supplied to the heater core 110 or the working fluid tank 60 while the temperature is constantly controlled through the oil cooler 150. When the control switch of the heater system is in the OFF state, the working fluid may be returned to the working fluid tank 60 through the switching valve 120 and supplied to the hydraulic pump 50 again, and in one embodiment, the oil cooler 150 may control the working fluid temperature to a preset temperature. For example, the preset maximum temperature may be 80 degrees as illustrated in (a) of FIG. 8, and in such a case, the fan member 155 of the oil cooler 150 may operate from approximately 30 degrees to control the temperature of the working oil to 80 degrees while constantly increasing the rotational speed.

Referring to FIG. 2, when the control switch of the heater system is in an ON state, the working fluid may be supplied to the heater core 110 through the switching valve 120. In one embodiment, the oil cooler 150 may control the temperature of the working fluid flowing into the heater core 110 to reach a preset maximum temperature. In addition, the oil cooler 150 may operate the fan member 155 only when the temperature of the working fluid is equal to or higher than a preset minimum temperature and may stop the operation of the fan member 155 when the working fluid temperature is lower than the preset minimum temperature. This is because air sufficiently heated through the heater core 110 may not be provided to the cabin 10 when the temperature of the working fluid is less than the preset minimum temperature. However, in this case, hot air may be supplied to the cabin 10 through an auxiliary heating device 200 such as a positive temperature coefficient (PTC) heater or a heat pump. Thereafter, when the temperature of the working fluid rises to or above the preset minimum temperature, the operation of the auxiliary heating device 200 is stopped, and the heated air may be supplied to the cabin 10 by using the heat of the working fluid recovered through the heater core 110.

In one embodiment, the preset maximum temperature may be 80 degrees as in the case where the control switch is in an OFF state, but embodiments are not limited thereto, and the appropriate temperature may be changed according to the intensity (temperature) of the heater requested by the driver.

In one embodiment, when the control switch is in an ON state, an operating start temperature of the fan member 155 may be set higher than the case when the control switch is in an OFF state. For example, the operating start temperature of the fan member 155 when the control switch is in an ON state may be set to a second temperature, for example, may be exemplarily set to 50 degrees as illustrated in (b) of FIG. 8, which is higher than a first temperature that is the operating start temperature of the fan member 155 when the control switch is in an OFF state. In this case, the fan member 155 may operate at a temperature of about 50 degrees and control the temperature of the working fluid to be 80 degrees while constantly increasing the rotational speed.

In the present invention, as described above, the heated air may be generated through the heater core 110 using the heat of the working fluid, but since it is difficult to supply the heated air to the cabin 10 in a state where the temperature of the working fluid has not sufficiently risen after starting the construction machine, the auxiliary heating device 200 may be further provided. In one embodiment, the auxiliary heating device 200 may include a PTC heater or a heat pump, but embodiments are not limited thereto, and it is obvious that any known heating device other than a heating device using waste heat of a working fluid may be used.

In one embodiment, when the control switch of the heater system is operated to an ON state, the switching valve 120 is switched and the working fluid passing through the oil cooler 150 may flow into the heater core 110. When the temperature of the working fluid introduced into the oil cooler 150 is lower than the preset second temperature, the operation of the fan member 155 of the oil cooler 150 may be stopped. In such a case, since the heater core 110 alone may not provide sufficiently heated air, the heated air may be supplied to the cabin 10 through the auxiliary heating device 200. Then, when the temperature of the working fluid flowing into the oil cooler 150 becomes equal to or higher than the preset second temperature, the operation of the auxiliary heating device 200 is stopped and the heated air may be provided through the heater core 110. In addition, when the temperature of the working fluid becomes equal to or higher than the preset second temperature, the operation of the fan member 155 of the oil cooler 150 starts, and the maximum temperature of the working fluid may be controlled to be 80 degrees while constantly increasing the rotational speed as illustrated in (b) of FIG. 8.

However, although it has been described here that the oil cooler 150 is disposed upstream of the switching valve 120 and the heater core 110, the oil cooler 150 may be disposed downstream of the switching valve 120 or the heater core 110 as illustrated in FIGS. 3 and 4. Referring to FIGS. 3 and 4, the oil cooler 150 may be disposed downstream of the switching valve 120, that is, between the switching valve 120 and the working fluid tank 60. In this case, the fan member 155 of the oil cooler 150 may be controlled as in the case where the control switch of the heater system is off. Referring to FIG. 3, when the driver turns off the control switch of the heater system, the temperature of the hot working fluid may be lowered while passing through the oil cooler 150 via the switching valve 120 and the working fluid may return to the working fluid tank 60. Referring to FIG. 4, when the driver turns on the control switch of the heater system, the switching valve 120 is switched and the hot working fluid is introduced into the heater core 110 without passing through the oil cooler 150, and heating of the cabin may be performed by the heat of hydraulic oil.

In an exemplary embodiment of the present invention, unlike the embodiments of FIGS. 1 to 4 described above, the switching valve 120 may be a four-way switching valve. Referring to FIGS. 5 to 7, in an exemplary embodiment of the present invention, the flow path of the working fluid supplied through the switching valve 120 may be configured to branch to each of the heater core 110, the oil cooler 150 and the working fluid tank 60.

First, referring to FIG. 5, when the temperature of the working fluid supplied from the main control valve 80 is equal to or less than the preset first temperature, the switching valve 120 may be switched so that the working fluid is supplied to the working fluid tank 60. Due to switching of the switching valve 120, the flow path communicating from the switching valve 120 to the heater core 110 and the oil cooler 150 may be closed, such that the working fluid may be directly recovered to the working fluid tank 60 without passing through the heater core 110 or the oil cooler 150. In this case, the preset first temperature may be a temperature low enough to make it difficult to use the heater core 110, and may be set to, for example, 40 degrees, but embodiments are not limited thereto. That is, in FIG. 5, since the working fluid that is not sufficiently hot may circulate quickly along the hydraulic system of the construction machine through the hydraulic pump 50, the temperature may rise quickly.

Referring to FIG. 6, when the temperature of the working fluid supplied from the main control valve 80 is higher than the preset first temperature, the switching valve 120 maybe switched such that the working fluid may be supplied to the heater core 110 or the working fluid tank 60. In this case, the preset first temperature may be a temperature low enough to make it difficult to use the heater core 110, and may be set to, for example, 40 degrees, but embodiments are not limited thereto. In this case, since the temperature of the working fluid is appropriately high enough to be used in the heater core, the working fluid may be supplied to the heater core 110 according to the control switch operation of the heater system by the worker and may be used as a heat source of the heater. In this case, since the temperature of the working fluid is not hot enough to require cooling, the flow path communicating from the switching valve 120 to the oil cooler 150 may be closed.

Referring to FIG. 7, when the temperature of the working fluid supplied from the main control valve 80 is equal to or higher than the preset second temperature, the switching valve 120 may be switched such that the working fluid may be supplied to any one of the heater core 110, the oil cooler 150, and the working fluid tank 60. In such a case, the preset second temperature may be a temperature at which the temperature of the working fluid becomes hot enough to require cooling using the oil cooler 150 according to the operation of the construction machine, and may be set to, for example, 80 degrees, but embodiments are not limited thereto. Here, since the temperature of the working fluid is sufficiently hot, the hot working fluid that has passed through the switching valve 120 may be supplied to the heater core 110 according to the control switch operation of the heater system by the worker and may be used as a heat source for the heater or may be supplied to the oil cooler 150 for cooling. Here, control of the rotational speed of the fan member 155 of the oil cooler 150 is the same as in the above-described embodiment. In addition, the working fluid may be directly recovered to the working fluid tank 60 without being supplied to the heater core 110 or the oil cooler 150.

The working fluid whose heat has been recovered through the heater core 110 or the working fluid whose temperature is controlled to maintain the proper maximum temperature by the oil cooler 150 may be continuously circulated by being supplied again to the hydraulic pump 50 via the working fluid tank 60.

The heater system proposed in the present invention may be applied to an air mixed type air conditioner, and in this case, the temperature of the air supplied to the cabin 10 may be adjusted by mixing the heated air generated by recovering heat from the working fluid through the heater core 110 and the cooled air generated from an air conditioner. In addition, when the heater system of the present invention is applied to a water valve type air conditioner, the temperature of the air supplied to the cabin 10 may be adjusted by controlling a flow rate of the working fluid flowing into the heater core 110.

As such, the heater system of the electric construction machine according to various embodiments of the present invention may be applied to the conventional hydraulic system or air conditioning system without a significant change, thereby reducing cost or time in the manufacturing process. In addition, by using the working fluid of the conventional hydraulic system in the electric construction machine as a heat source, there is no need to install a separate heating device, which has the effect of reducing manufacturing costs. In addition, even when the auxiliary heating device 200 is operated, since it is limitedly operated according to the temperature of the working fluid, the use time thereof may be reduced, thereby reducing the electrical energy of the battery 20.

The above description is merely an example of the present invention, and various modifications and variations may be made by those skilled in the art. Therefore, the embodiments disclosed in the present invention are not intended to limit the scope of the present invention, but to explain, and the scope of the present invention is not limited by these embodiments. The protection scope of the present invention is defined according to the claims below.

## Claims

1. A heater system of an electric construction machine comprising a hydraulic pump (50) driven by an electric motor (30) and a main control valve (80) configured to supply a working fluid discharged from the hydraulic pump (50) to at least one actuator, the heater system comprising:
a heater core (110) which is disposed downstream of the actuator and through which the working fluid passes,
a switching valve (120) configured to selectively supply the working fluid to the heater core (110); and
an oil cooler (150) configured to control a temperature of the working fluid,
wherein a heated air is supplied to a cabin through the heater core using a heat of the working fluid, **characterized in that**
a flow path of the working fluid supplied through the switching valve (120) is branched into each of the heater core (110), the oil cooler (150) and a working fluid tank (60).

2. The heater system of an electric construction machine of claim 1, wherein the oil cooler (150) is disposed upstream of the heater core (110) and configured to control a temperature of the working fluid.

3. The heater system of an electric construction machine of claim 1, wherein the oil cooler (150) is disposed between the switching valve (120) and a working fluid tank (60) or between the switching valve (120) and the main control valve (80).

4. The heater system of an electric construction machine of claim 1, wherein when the temperature of the working fluid supplied from the main control valve (80) is equal to or less than a preset first temperature, the switching valve (120) is switched so that the working fluid is supplied to the working fluid tank (60).

5. The heater system of an electric construction machine of claim 1, wherein when the temperature of the working fluid supplied from the main control valve (80) is higher than a preset first temperature, the switching valve (120) is switched so that the working fluid is supplied to the heater core (110) or the working fluid tank (60).

6. The heater system of an electric construction machine of claim 1 , wherein when the temperature of the working fluid supplied from the main control valve (80) is equal to or higher than a preset second temperature, the switching valve (120) is switched so that the working fluid is supplied to the heater core (110), the oil cooler (150) or the working fluid tank (60).

7. The heater system of an electric construction machine of any one of claim 1 or claim 2, further comprising a fan member (150) configured to control the temperature of the working fluid passing through the oil cooler (150) through control of a rotational speed.

8. The heater system of an electric construction machine of claim 1, further comprising: an auxiliary heating device (200) configured to supply the heated air to the cabin.

9. The heater system of an electric construction machine of claim 1, wherein the switching valve (120) is configured to supply the working fluid to the heater core (110) according to a worker's ON signal.

10. The heater system of an electric construction machine of claim 7, wherein operation of the fan member (155) is stopped when the temperature of the working fluid is equal to or less than a preset temperature.

11. The heater system of an electric construction machine of claim 7, wherein the fan member (155) is operated only when the temperature of the working fluid is equal to or higher than a preset temperature.

## Patentansprüche

1. Heizungssystem einer elektrischen Baumaschine, umfassend eine Hydraulikpumpe (50), die durch einen Elektromotor (30) angetrieben wird, und ein Hauptsteuerventil (80), das dazu eingerichtet ist, ein von der Hydraulikpumpe (50) abgegebenes Arbeitsfluid mindestens einem Aktuator zuzuführen, wobei das Heizungssystem umfasst:
einen Heizungskern (110), der stromabwärts des Aktuators angeordnet ist und durch den das Arbeitsfluid strömt,
ein Schaltventil (120), das dazu eingerichtet ist, das Arbeitsfluid selektiv dem Heizungskern (110) zuzuführen; und
einen Ölkühler (150), der dazu eingerichtet ist, eine Temperatur des Arbeitsfluids zu steuern,
wobei einer Kabine durch den Heizungskern eine erwärmte Luft unter Verwendung einer Wärme des Arbeitsfluids zugeführt wird, **dadurch gekennzeichnet, dass** ein Strömungspfad des durch das Schaltventil (120) zugeführten Arbeitsfluids in den Heizungskern (110), in den Ölkühler (150) und in einen Arbeitsfluidtank (60) hinein verzweigt ist.

2. Heizungssystem einer elektrischen Baumaschine nach Anspruch 1, wobei der Ölkühler (150) stromaufwärts des Heizungskerns (110) angeordnet und dazu eingerichtet ist, eine Temperatur des Arbeitsfluids zu regeln.

3. Heizungssystem einer elektrischen Baumaschine nach Anspruch 1, wobei der Ölkühler (150) zwischen dem Schaltventil (120) und einem Arbeitsfluidtank (60) oder zwischen dem Schaltventil (120) und dem Hauptsteuerventil (80) angeordnet ist.

4. Heizungssystem einer elektrischen Baumaschine nach Anspruch 1, wobei, wenn die Temperatur des von dem Hauptsteuerventil (80) zugeführten Arbeitsfluids gleich oder kleiner als eine voreingestellte erste Temperatur ist, das Schaltventil (120) so geschaltet wird, dass das Arbeitsfluid dem Arbeitsfluidtank (60) zugeführt wird.

5. Heizungssystem einer elektrischen Baumaschine nach Anspruch 1, wobei, wenn die Temperatur des von dem Hauptsteuerventil (80) zugeführten Arbeitsfluids höher als eine voreingestellte erste Temperatur ist, das Schaltventil (120) so geschaltet wird, dass das Arbeitsfluid dem Heizungskern (110) oder dem Arbeitsfluidtank (60) zugeführt wird.

6. Heizungssystem einer elektrischen Baumaschine nach Anspruch 1, wobei, wenn die Temperatur des von dem Hauptsteuerventil (80) zugeführten Arbeitsfluids gleich oder höher als eine voreingestellte zweite Temperatur ist, das Schaltventil (120) so geschaltet wird, dass das Arbeitsfluid dem Heizungskern (110), dem Ölkühler (150) oder dem Arbeitsfluidtank (60) zugeführt wird.

7. Heizungssystem einer elektrischen Baumaschine nach einem der Ansprüche 1 oder 2, des Weiteren umfassend ein Lüfterelement (150), das dazu eingerichtet ist, die Temperatur des durch den Ölkühler (150) strömenden Arbeitsfluids durch Steuern einer Drehzahl zu regeln.

8. Heizungssystem einer elektrischen Baumaschine nach Anspruch 1, des Weiteren umfassend eine Zusatzheizvorrichtung (200), die dazu eingerichtet ist, die erwärmte Luft der Kabine zuzuführen.

9. Heizungssystem einer elektrischen Baumaschine nach Anspruch 1, wobei das Schaltventil (120) dazu eingerichtet ist, dem Heizungskern (110) das Arbeitsfluid gemäß dem EIN-Signal eines Bedieners zuzuführen.

10. Heizungssystem einer elektrische Baumaschine nach Anspruch 7, wobei der Betrieb des Lüfterelements (155) angehalten wird, wenn die Temperatur des Arbeitsfluids gleich oder niedriger als eine voreingestellte Temperatur ist.

11. Heizungssystem einer elektrischen Baumaschine nach Anspruch 7, wobei das Lüfterelement (155) nur dann betrieben wird, wenn die Temperatur des Arbeitsfluids gleich oder höher als eine voreingestellte Temperatur ist.

## Revendications

1. Système de chauffage d'un engin de chantier électrique comprenant une pompe hydraulique (50) entraînée par un moteur électrique (30) et une vanne de commande principale (80) configurée pour fournir un fluide de travail refoulé par la pompe hydraulique (50) à au moins un actionneur, le système de chauffage comprenant :
un noyau de chauffage (110) qui est disposé en aval de l'actionneur et à travers lequel passe le fluide de travail,
une vanne de commutation (120) configurée pour fournir sélectivement le fluide de travail au noyau de chauffage (110) ; et
un refroidisseur d'huile (150) configuré pour réguler une température du fluide de travail,
dans lequel un air chauffé est fourni à un habitacle par l'intermédiaire du noyau de chauffage à l'aide d'une chaleur du fluide de travail, **caractérisé en ce que** une voie d'écoulement du fluide de travail fourni par l'intermédiaire de la vanne de commutation (120) est ramifiée en chacun du noyau de chauffage (110), du refroidisseur d'huile (150) et d'un réservoir de fluide de travail (60).

2. Système de chauffage d'un engin de chantier électrique selon la revendication 1, dans lequel le refroidisseur d'huile (150) est disposé en amont du noyau de chauffage (110) et configuré pour réguler une température du fluide de travail.

3. Système de chauffage d'un engin de chantier électrique selon la revendication 1, dans lequel le refroidisseur d'huile (150) est disposé entre la vanne de commutation (120) et un réservoir de fluide de travail (60) ou entre la vanne de commutation (120) et la vanne de commande principale (80).

4. Système de chauffage d'un engin de chantier électrique selon la revendication 1, dans lequel, lorsque la température du fluide de travail fourni par la vanne de commande principale (80) est égale ou inférieure à une première température prédéfinie, la vanne de commutation (120) est commutée de manière à ce que le fluide de travail soit fourni au réservoir de fluide de travail (60).

5. Système de chauffage d'un engin de chantier électrique selon la revendication 1, dans lequel, lorsque la température du fluide de travail fourni par la vanne de commande principale (80) est supérieure à une première température prédéfinie, la vanne de commutation (120) est commutée de manière à ce que le fluide de travail soit fourni au noyau de chauffage (110) ou au réservoir de fluide de travail (60).

6. Système de chauffage d'un engin de chantier électrique selon la revendication 1, dans lequel, lorsque la température du fluide de travail fourni par la vanne de commande principale (80) est égale ou supérieure à une seconde température prédéfinie, la vanne de commutation (120) est commutée de manière à ce que le fluide de travail soit fourni au noyau de chauffage (110), au refroidisseur d'huile (150) ou au réservoir de fluide de travail (60).

7. Système de chauffage d'un engin de chantier électrique selon l'une quelconque des revendications 1 ou 2, comprenant en outre un élément de ventilateur (150) configuré pour réguler la température du fluide de travail passant à travers le refroidisseur d'huile (150) par le biais d'une commande d'une vitesse de rotation.

8. Système de chauffage d'un engin de chantier électrique selon la revendication 1, comprenant en outre : un dispositif de chauffage auxiliaire (200) configuré pour fournir de l'air chauffé à l'habitacle.

9. Système de chauffage d'un engin de chantier électrique selon la revendication 1, dans lequel la vanne de commutation (120) est configurée pour fournir le fluide de travail au noyau de chauffage (110) en fonction d'un signal d'activation d'un opérateur.

10. Système de chauffage d'un engin de chantier électrique selon la revendication 7, dans lequel le fonctionnement de l'élément de ventilateur (155) est arrêté lorsque la température du fluide de travail est égale ou inférieure à une température prédéfinie.

11. Système de chauffage d'un engin de chantier électrique selon la revendication 7, dans lequel l'élément de ventilateur (155) ne fonctionne que lorsque la température du fluide de travail est égale ou supérieure à une température prédéfinie.
